# EUROPEAN PATENT SPECIFICATION

(11) **EP 3 767 766 B1**
(45) Date of publication and mention of the grant of the patent: **26.10.2022**
(21) Application number: 20186090.5
(22) Date of filing: 15.07.2020
(51) Int. Cl.: H02G 3/08, H02G 3/12, H02G 3/18

(54) **ELECTRIC OR ELECTRONIC DEVICE**
ELEKTRISCHE ODER ELEKTRONISCHE VORRICHTUNG
DISPOSITIF ÉLECTRIQUE OU ÉLECTRONIQUE

(30) Priority: 16.07.2019 BE 201905464
(43) Date of publication of application: 20.01.2021
(73) Proprietor: Niko NV, 9100 Sint-Niklaas (BE)
(72) Inventor: DE PAUW, Frederick, 9230 Wetteren (BE); ROCTUS, Jerry, 4567AL Clinge (NL)
(74) Representative: DenK iP bv

(56) References cited:
- EP-A1- 2 924 815
- EP-A1- 3 104 470
- WO-A1-2017/017338
- DE-U1- 8 704 214
- KR-B1- 100 633 457

## Description

### Technical Field

The present invention relates to an electric or electronic device for building into a wall or ceiling. More particularly, the present invention relates to an electric or electronic device, such as e.g. a socket, in which the chance on accidental removal of electrical wires for connecting the electric or electronic device to the electrical network is significantly reduced.

### Background

For electric or electronic devices to be able to operate, the devices are required to be connected to an electrical network by means of electrical wires. For example, when an electrical socket is to be installed in a wall or a ceiling, multiple electrical wires are connected between the electrical socket and the electrical network. When it is required to remove the electrical socket from the wall, the electrical wires must be disengaged or unlocked from the electrical socket. Conventionally, mechanisms that allow locking and unlocking of the electrical wires are located at a back side of the electrical socket. With such configuration of the electrical socket, the electrical wires may be accidentally touched by fingers of a user during mounting or dismounting of the electrical socket to or from the wall or ceiling. Such contact between the fingers and the mechanism can cause loosening, or even release, of the electrical wires from the electrical socket. Such loosening or release of the electrical wires is not desired when the electrical socket is being installed. When it is not noticed by the user, the electrical socket will malfunction or even cease to function.

WO 2017/017338 describes an assembly of electrical appliances to be mounted in a wall. The assembly comprises two different modules, each comprising a base housing electric terminals, one of said bases being equipped with means for securing in a junction box, the other base being equipped with means for securing in a cavity provided in the wall. The assembly further comprises a terminal strip comprising a base housing electrical conductors for connecting the electric terminals of one of the modules to the electric terminals of the other module. At least part of the base of the terminal strip is integral with at least part of the base of one of the two modules. KR100633457 describes a switch box which allows minimizing the required number of cables. The switch box comprises a body with grooves formed along a sidewall. Further, the switch box comprises a connector with a base seated on the groove, conducting blocks, first/second electrodes and a cover pressing the electrodes. A fixing member has a receiving groove engaging with the connector. A cover covers an upper portion of the body.

EP 3 104 470 describes a socket assembly for flush-mounted installation in a wall. The socket assembly comprises a first flush-mounting a first and second flush-mounting box respectively having a first and second sidewall being intended for being arranged adjacent to each other in the wall. The socket assembly furthermore comprises a first and second base, each comprising a socket function, and a first and second fixation means for respectively fixing the first and second base in respectively the first and second flush-mounting box. The socket assembly furthermore comprises a bridge part configured for extending across the first and second sidewall inside the interior of the first and second flush-mounting box and behind the first and second base. The bridge part comprises electrically conductive paths electrically connecting the socket function of the first base to the socket function of the second base.

DE 8704214 describes a built-in socket for an electrical installation device. This socket, which is intended for receiving an electrical installation device, is open at the front side and has two mutually opposing holders on one side, the end parts of which engage in grooves that run longitudinally on both sides of a channel. The invention is based on creating possibilities for securing the integrated electrical installation devices against overvoltages.

EP 2 924 815 relates to a mounting interface for fixing an electrical module to a wall. The mounting interface has a main plane, which is parallel to the wall when the mounting surface is in its normal mounted position. The mounting interface further has a central opening, parallel to the main plane and through which the electrical module can be inserted in the mounting interface. The mounting interface comprises an arch, or bridge, which has internal plug terminals for plugging the electrical module therein. A module receiving cavity or volume is defined between the central opening and the connection arch. The arch comprises external connection terminals which are accessible for inserting external wires from the outside of the module cavity, without passing in the cavity.

### Summary of the Invention

It is an object of embodiments of the present invention to provide an electric or electronic device in which accidental release of electrical wires of the device connected to the electrical network is significantly reduced or even prevented.

The above objective is accomplished by a device according to embodiments of the present invention.

According to an aspect of the present invention, an electric or electronic device for being built into a wall or ceiling is disclosed. The electric or electronic device comprises a housing having a housing front and a housing back. The housing front comprises two or more recesses, where each recess is adapted for housing an electric or electronic device function. In an example, the electric or electronic device function may be one of, but not limited to, an electrical socket, a switch, a universal serial bus (USB), a dimmer. The device also comprises a frame adapted for being provided onto the housing front and for fixing the electric or electronic device to the wall or ceiling. The frame comprises a central opening adapted to receive the electric or electronic device functions. The housing front comprises, in between two neighboring recesses and at an outer surface of a side wall of the housing front, three pairs of apertures for receiving electrical wires for connecting the electric or electronic device to an electrical network. The housing front further comprises a ridge in between every two neighboring recesses. The ridge extends towards the frame or, when built in the wall or ceiling, in a direction away from the wall or ceiling. The ridge comprises three apertures adapted to receive the electrical wires guided from the three pairs of apertures. Each of the three apertures is located along a longitudinal axis of the housing front. The housing front further comprises a locking mechanism in each of the three apertures, where the locking mechanism may, for example according to embodiments of the invention, comprise a snap connection. The locking mechanism is adapted for locking and unlocking the electrical wires.

In an electric or electronic device according to embodiments of the invention, the electrical wires may be easily released when so required, because the locking mechanism is provided at the front side of the electric or electronic device, when the electric or electronic device is built into a wall or ceiling.

According to the invention, the housing front further comprises a barrier around and in between each of the three apertures. The barrier extends in a direction perpendicularly away from a surface of the ridge. In an embodiment, the barrier is integrally formed with the ridge. In another embodiment, a length of the barrier is equal to a width of the ridge.

The barrier located around and in between each of the three apertures defined in the ridge, minimizes a possibility of accidental unlocking of the electrical wires from the electric or electronic device, when compared to a prior art arrangement where the electrical wires are routed through a back side of the electric or electronic device function.

According to embodiments of the invention, the housing front and the housing back may have chamfered features which, when the housing front and the housing back are connected to each other, form a V-shaped feature, such that the three pairs of apertures are located within the V-shaped feature.

### Brief Description of the Drawings

It has to be noted that same reference signs in the different figures refer to same, similar or analogous elements.
FIG. 1 illustrates an exploded view of an electric or electronic device according to embodiments of the invention;
FIG. 2 illustrates a perspective view of a sub-assembly of the electric or electronic device of FIG. 1, according to an embodiment of the present invention;
FIG. 3 illustrates a perspective view of the sub-assembly including a locking mechanism, according to an embodiment of the present invention;
FIG. 4 illustrates a side view (upper drawing) and a front view (lower drawing) of a device according to embodiments of the present invention;
FIG. 5 illustrates a perspective view of a device according to other embodiments of the present invention; and
FIG. 6 illustrates a top view of the device of FIG. 5.

### Detailed Description

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified. Thus, part A being connected to part B is not limited to part A being in direct contact to part B, but also comprises indirect contact between part A and part B, in other words also comprises the case where intermediate parts are present in between part A and part B.

Not all embodiments of the invention comprise all features of the invention. In the following description and claims, any of the claimed embodiments can be used in any combination.

The present invention provides an electric or electronic device for being built into a wall or ceiling. The electric or electronic device comprises a housing comprising a housing front and a housing back, the housing front comprising at least two recesses, each recess being adapted for housing an electric or electronic device function. The electric or electronic device further comprises a frame adapted for being provided onto the housing front and for fixing the electric or electronic device to the wall or ceiling, the frame having a central opening adapted to receive the electric or electronic device functions. The housing front comprises, in between two neighboring recesses and at an outer surface of a side wall of the housing front, three pairs of apertures for receiving electrical wires for connecting the electric or electronic device to an electrical network. The housing front further comprises a ridge in between every two neighboring recesses, the ridge extending towards the frame, or when built in the wall or ceiling, in a direction away from the wall or ceiling. The ridge comprises three apertures adapted to receive the electrical wires guided from the three pairs of apertures. A locking mechanism is provided in each of the three apertures, the locking mechanism being adapted for locking and unlocking the electrical wires.

In an electric or electronic device according to embodiments of the invention, the electrical wires may be easily released when so required, because the locking mechanism is provided at the front side of the electric or electronic device, when the electric or electronic device is built into a wall or ceiling.

Reference will now be made in detail to specific embodiments or features, examples of which are illustrated in the accompanying drawings. Wherever possible, corresponding or similar reference numbers will be used throughout the drawings to refer to the same or corresponding parts. Moreover, references to various elements described herein, are made collectively or individually when there may be more than one element of the same type. However, such references are merely exemplary in nature. It may be noted that any reference to elements in the singular may also be construed to relate to the plural and vice-versa without limiting the scope of the invention to the exact number or type of such elements unless set forth explicitly in the appended claims. No element, act, or instruction used herein should be construed as critical or essential unless explicitly described as such. Also, as used herein, the articles "a" and "an" are intended to comprise one or more items and may be used interchangeably with "one or more".

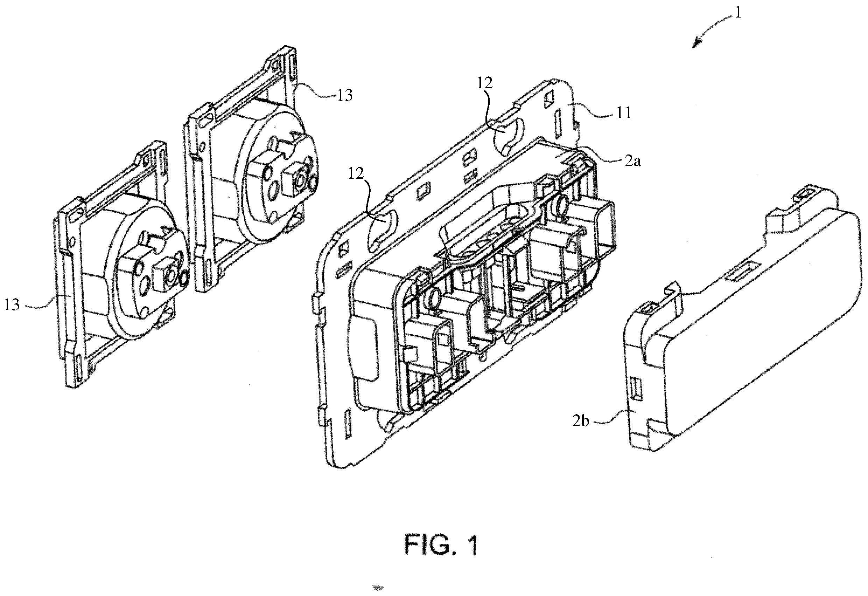

Referring to FIG. 1, an exploded view of an electric or electronic device 1 is illustrated. The electric or electronic device 1 is adapted for being built into a wall or ceiling (not shown).For the ease of explanation, in the following description, the electric or electronic device 1 will be referred to as the device 1. Also, for explaining the invention, the example of an electrical socket will be used. However, it has to be understood that this is not intended to limit the invention in any way. The mechanism described in this invention can be used for an electric or electronic device that comprise at least two electric or electronic functions and that is connected to the electrical network by means of electrical wires.

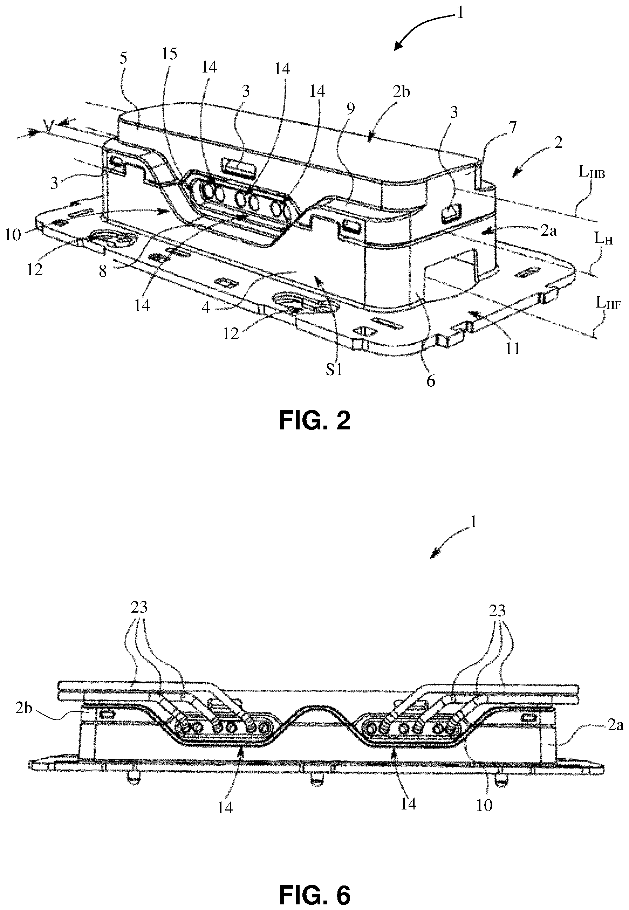

A device 1 according to embodiments of the invention is illustrated in FIG. 1 (exploded view) and FIG. 2 (assembled view). The device 1 comprises a housing 2 comprising a housing front 2a and a housing back 2b. The housing front 2a and the housing back 2b may be rectangular structures and may be connected to each other so as to form the housing 2 of the device 1. According to embodiments of the invention, the housing front 2a may be connected to the housing back 2b by means of a snap connection 3. When the housing front 2a is connected to the housing back 2b, a first side wall 4 of the housing front 2a and a first side wall 5 of the housing back 2b are aligned to form one side wall of the housing 2. Likewise, a second side wall 6 of the housing front 2a and a second side wall 7 of the housing back 2b are aligned to form another side wall of the housing 2.

The housing front 2a may further comprise a first chamfered feature 8 defined on the first side wall 5 and extending along a longitudinal axis 'L_{HF}' of the housing front 2a. The housing back 2b may comprise a second chamfered feature 9 defined on the first side wall 5 and extending along a longitudinal axis 'L_{HB}' of the housing back 2b. Each of the first chamfered feature 8 and the second chamfered feature 9 may be so designed to form a V-shaped feature 10 when the housing front 2a is connected to the housing back 2b. The V-shaped feature 10 defines a continuous edge having a width 'V' and extending along a longitudinal axis 'L_{H}' of the housing 2. According to embodiments of the invention, the width 'V' of the V-shaped feature 10 may be uniform along the longitudinal axis 'L_{H}' of the housing 2. According to other embodiments of the invention, the width 'V' of the V-shaped feature 10 may vary along the longitudinal axis 'L_{H}' of the housing 2. The use of the term 'V-shaped' herein with respect to the feature 10 is not meant to limit the invention in any way.

The device 1 further comprises a frame 11. The frame 11 is adapted for being connected to the housing front 2a (see FIG. 1). The frame 11 may have a rectangular plate structure and comprises multiple screw holes 12 for fixing the device 1 to the wall or ceiling. The frame 11 further comprises a central opening (see further) for receiving at least two electric or electronic device functions 13. According to the present embodiment, the electric or electronic device functions may be electrical sockets, as shown in FIG. 1. However, this is not intended to limit the invention in any way. Any other electric or electronic device function or combination of electric or electronic device functions as known by a person skilled in the art may fit into the central opening in the frame 11. For example but not limiting, other electric or electronic device functions that may be used with the present invention are switches, USB sockets, smart sockets, TV sockets, dimmers, and the like. Depending on the type of electric or electronic device 1, the device 1 may then furthermore comprise various other components. For example, in case of an electrical socket, the electrical socket may furthermore comprise a pin-earth, side-earthing, pole contacts, central plates and a cover plate.

According to embodiments of the invention, the housing front 2a may further comprise three pairs of apertures 14. The three pairs of apertures 14 are defined at an outer surface 'S1' of the first side wall 5 of the housing front 2a. According to embodiments of the invention, the three pairs of apertures 14 may be provided in a recess 15 at the outer surface 'S1' of the first side wall 5 of the housing front 2a. Each pair of apertures 14 is defined along the longitudinal axis 'L_{HF}' of the housing front 2a and may be located distant from an adjacent pair of apertures. Each of the three pairs of apertures 14 is adapted for receiving electrical wires for connecting the device 1 to an electrical network. With 'electrical network' is meant a network of electrical wiring provided for supplying electrical current to electric or electronic appliances in the building. For example, the electrical network in a house may refer to a set of electrical wires drawn in the wall or ceiling to fetch electrical current from a main power source of the house to the electric or electronic appliances.

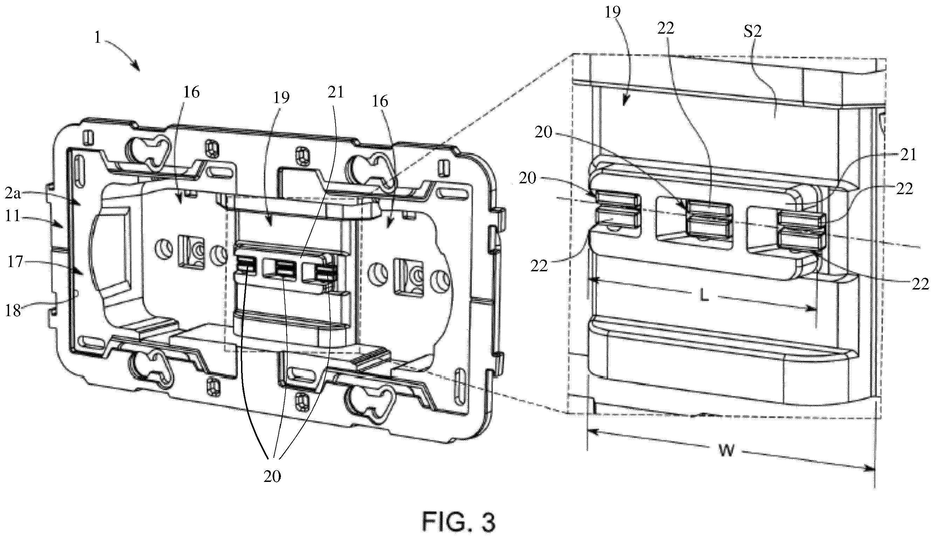

FIG. 3 illustrates a perspective view of a sub-assembly of the housing front 2a with the frame 11 attached thereto. According to embodiments of the invention, the housing front 2a further comprises at least two recesses, in the example given two recesses 16. Each of the at least two recesses 16 may be a hollow part in the front housing 2a that is adapted for housing an electric or electronic device function 13. It has to be understood that the device 1 may, according to embodiments of the invention, also comprise more than two recesses 16 for receiving electric or electronic device functions 13. The frame 4 comprises a central opening 17, where a periphery 18 of the central opening 17 is adapted to connect with the housing front 2a, when the frame 11 is provided onto the housing front 2a. The central opening 17 is adapted to receive at least two electric or electronic device functions 13.

The housing front 2a further comprises a ridge 19 having width 'W' and located between each two neighboring recesses 16, as shown in FIG. 3. According to embodiments of the invention, the ridge 19 extends towards the frame 11. In other words, when the device 1 is built into the wall or ceiling, the ridge 19 extends in a direction away from the wall or ceiling. The ridge 19 comprises three apertures 20 located along the longitudinal axis 'L_{HF}' of the housing front 2a.

The housing front 2a also comprises a barrier 21 around and in between each of the three apertures 20 defined in the ridge 19. The barrier 21 has a length 'L' and extends in a direction perpendicularly away from a surface 'S2' of the ridge 19. The barrier 21 extends to a predetermined distance from the surface 'S2', so that each of the three apertures 20 are not accessible by, e.g. a finger of a user. The length 'L' of the barrier 21 may be equal to the width 'W' of the ridge 19. In another embodiment, the length 'L' of the barrier 21 may be less than the width 'W' of the ridge 19. In yet another embodiment, the barrier 21 may be integrally formed with the ridge 19. In yet another embodiment, the barrier 21 may be a separate component adapted to couple with the ridge 19.

A locking mechanism 22 is provided in each of the three apertures 20 in the ridge 19. According to embodiments of the invention, each locking mechanism 22 may, for example, comprise a snap connection.

According to embodiments of the invention, the barrier 21 located around and in between each of the three apertures 20 defined in the ridge 19, minimizes a possibility of accidental unlocking of the electrical wires 23 from the electric or electronic device 1, when compared to a prior art arrangement where the electrical wires are routed through a back side of the electric or electronic device function 13.

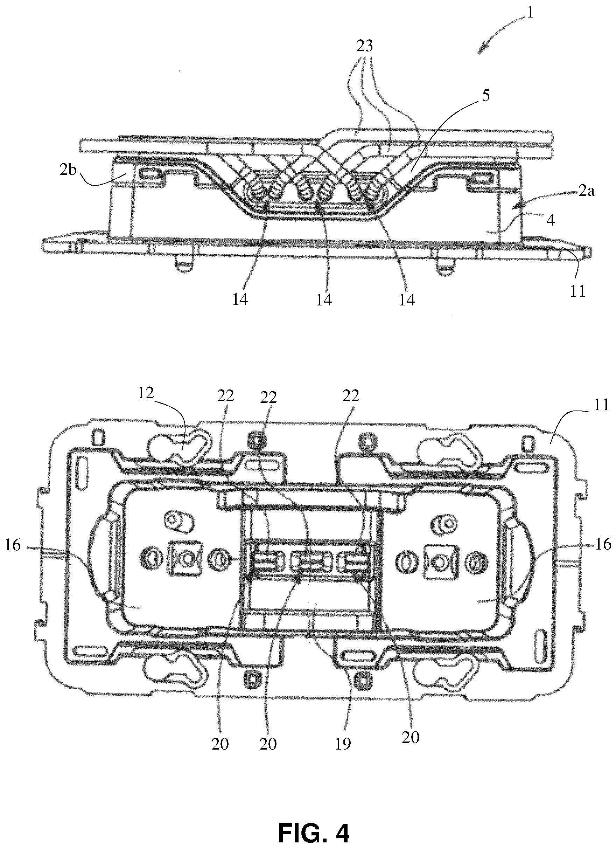

FIG. 4 illustrates a side view (upper drawing) and a front view (lower drawing) of a device 1 according to embodiments of the invention. When holding the device 1 for installing in or on a wall or ceiling, the apertures 14 for receiving the electrical wires 23 are located at a side wall of the device 1. When providing the device 1 in the wall, these apertures 14 with the electrical wires 23 are not visible from outside. The three pairs of apertures 14 defined in the first side wall 4 of the housing front 2a are thus adapted for receiving electrical wires 23 for connecting the device 1 to the electrical network. The electrical wires 23, three for each of the electric or electronic device functions 13, are introduced through the three pairs of apertures 14.The electrical wires 23 are then guided to and locked in the locking mechanisms 22. The locking mechanism 22 may, for example, be a snap mechanism, which closes automatically when an electrical wire 23 is inserted, thereby locking the electrical wire 23. This may be done before the housing back 2b is connected to the housing front 2a, such that the electrical wires 23 can be easily guided from the apertures 14 to the apertures 20 with the locking mechanism 22. The wires are then locked and the housing 2 can be closed by connecting the housing back 2b to the housing front 2a.

As can be seen from the drawings, the locking mechanism 22 are provided in a ridge 19 on a front side of the device 1. Hence, when handling the device 1 for providing it into a wall or ceiling, no accidental touching of the wires or the locking mechanism is possible. As such, loosening of the electrical wires 23 or unintended release of the electrical wires 23 from apertures 20 may be prevented. Further, the presence of the barrier 21 surrounding the apertures 20 and thus the locking mechanism 22, even further reduces or even fully prevents accidental release or loosening of the electrical wires 23.

Unlocking the electrical wires 23 from the locking mechanism 22 can be done by, for example, inserting, from the front, a screwdriver into the aperture 20 and slightly tilt it. The snap mechanism is opened and the electrical wires 23 can be released. Hence, the device 1 has not to be taken out of the wall or ceiling for releasing the electrical wires 23, which makes the process of removing the device 1 from the wall or ceiling much simpler.

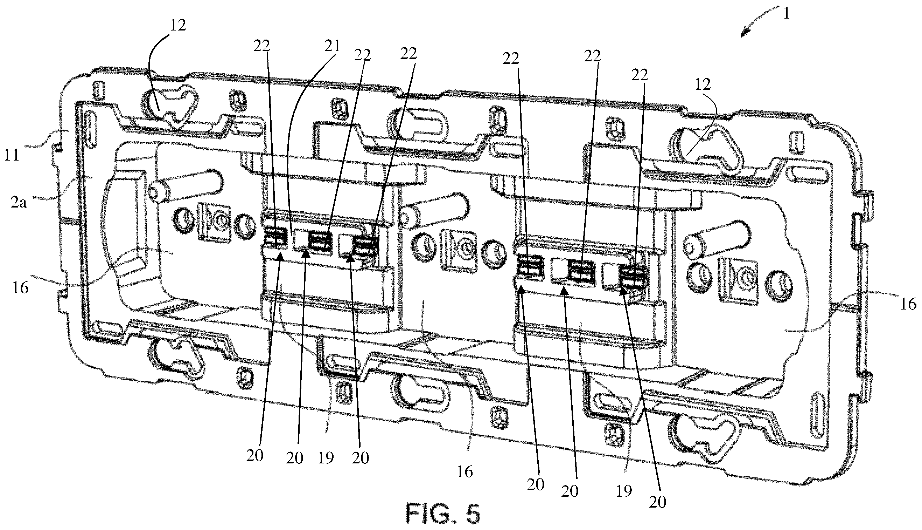

FIG. 5 illustrates a perspective front view of a device 1 according to a further embodiment of the present invention. The device 1 comprises a frame 11 provided onto a housing front 2a. According to the present embodiment, the housing front 2a may comprise three recesses 16, each adapted for receiving an electric or electronic device function 13. The housing front 2a comprises a ridge 19 in between each two neighbouring recesses 16. Hence, in the present embodiments, the housing front 2a may comprise 2 ridges 19. Each of the ridges 19 comprises three apertures 20, each aperture 20 comprising a locking mechanism 22.

FIG. 6 illustrates a top view of the device 1 of FIG. 5. The housing front 2a comprises a further set of three pairs of apertures 14, if compared to the device 1 illustrated in FIGs. 1 to 4, located within an adjacent V-shaped feature 604.

Hence, it is an advantage of embodiments of the invention that the locking mechanisms 22 for locking and unlocking the electrical wires 23 are provided at a front side of the device 1. The locking mechanisms 22 lock the electrical wires 23 in position and the location of these locking mechanisms 22 prevents any unintended loosening or release of the electrical wires 23 from the housing front 2a. The locking mechanisms 22 may be actuated between a locked position and an unlocked position, with the aid of the tool, such as the screwdriver. Hence, easy release of the electrical wires 23 is provided. Also, any unintended contact of a user's finger and the locking 22 during installation of the device 1 in a wall or ceiling significantly reduces or even eliminates the possibility of the electrical wires 23 being released.

In addition, the barrier 21 extending around and in between the apertures 20 defined in the ridge 19 further prevent contact of user's finger with the apertures 20. Therefore, possibility of accidental unlocking of the electrical wires 23 is further reduced when compared to a conventional configuration where the locking mechanism is located at a back side of the device 1.

While aspects of the present invention have been particularly shown and described with reference to the embodiments above, it will be understood by those skilled in the art that various additional embodiments may be contemplated by the modification of the disclosed machines, systems and methods without departing from the scope of what is disclosed. Such embodiments should be understood to fall within the scope of the present invention as determined based upon the claims and any equivalents thereof.

## Claims

1. An electric or electronic device (1) for being built into a wall or ceiling, the electric or electronic device (1) comprising:
- a housing (2) comprising a housing front (2a) and a housing back (2b), the housing front (2a) comprising at least two recesses (16), each recess (16) being adapted for housing an electric or electronic device function (13), and
- a frame (11) adapted for being provided onto the housing front (2a) and for fixing the electric or electronic device (1) to the wall or ceiling, the frame (11) having a central opening (17) adapted to receive the electric or electronic device functions (13),
**characterized in that** the housing front (2a) further comprises:
- in between two neighboring recesses (16) and at an outer surface (S1) of a side wall (4) of the housing front (2a), three pairs of apertures (14) for receiving electrical wires (23) for connecting the electric or electronic device (1) to an electrical network;
- a ridge (19) in between every two neighboring recesses (16), the ridge (19) extending towards the frame (11), or when built in the wall or ceiling, in a direction away from the wall or ceiling, wherein the ridge (19) comprises apertures (20) adapted to receive electrical wires (23) guided from the three pairs of apertures (14);
- a barrier (21) around and in between each of the three apertures (20), the barrier (21) extending in a direction perpendicularly away from a surface (S2) of the ridge (19), and
- a locking mechanism (22) in each of the apertures (20), the locking mechanism (22) being adapted for locking and unlocking the electrical wires (23).

2. An electric or electronic device (1) according to claim 1, wherein the barrier (21) is integrally formed with the ridge (19).

3. Electric or electronic device (1) according to claim 1, wherein the barrier (21) is a separate component adapted to couple with the ridge (19).

4. An electric or electronic device (1) according to any of the previous claims, wherein the locking mechanism (22) comprises a snap connection.

5. The electric or electronic device (1) according to any of the previous claims, wherein each of the apertures (20) is located along a longitudinal axis (L_{HF}) of the housing front (2a).

6. The electric or electronic device (1) according to any of the previous claims, the barrier (21) having a length 'L' and the ridge (19) having a width 'W', wherein the length 'L' of the barrier (21) is equal to the width 'W' of the ridge (19).

7. The electric or electronic device (1) according to any of the previous claims, wherein the housing front (2a) and the housing back (2b) have chamfered features (8, 9) which, when the housing front (2a) and the housing back (2b) are connected to each other, form a V-shaped feature (10) such that the three pairs of apertures (14) are located within the V-shaped feature (10).

## Patentansprüche

1. Elektrische oder elektronische Vorrichtung (1) zum Einbau in eine Wand oder eine Decke, die elektrische oder elektronische Vorrichtung (1) umfassend:
- ein Gehäuse (2), umfassend eine Gehäusevorderseite (2a) und eine Gehäuserückseite (2b), die Gehäusevorderseite (2a) umfassend mindestens zwei Vertiefungen (16), wobei jede Vertiefung (16) zum Aufnehmen einer Funktion der elektrischen oder elektronischen Vorrichtung (13) angepasst ist, und
- einen Rahmen (11), der angepasst ist, um an der Gehäusevorderseite (2a) bereitgestellt zu werden und um die elektrische oder elektronische Vorrichtung (1) an der Wand oder der Decke zu befestigen, wobei der Rahmen (11) eine zentrale Öffnung (17) aufweist, die angepasst ist, um die Funktionen der elektrischen oder elektronischen Vorrichtung (13) zu empfangen,
**dadurch gekennzeichnet, dass** die Gehäusevorderseite (2a) ferner umfasst:
- zwischen zwei benachbarten Vertiefungen (16) und an einer Außenoberfläche (S1) einer Seitenwand (4) der Gehäusevorderseite (2a), drei Paare von Öffnungen (14) zum Empfangen von elektrischen Drähten (23) zum Verbinden der elektrischen oder elektronischen Vorrichtung (1) mit einem elektrischen Netzwerk;
- einen Grat (19) zwischen jeweils zwei benachbarten Vertiefungen (16), wobei sich der Grat (19) in Richtung des Rahmens (11) oder, wenn er in die Wand oder die Decke eingebaut ist, in einer Richtung weg von der Wand oder der Decke erstreckt, wobei der Grat (19) Öffnungen (20) umfasst, die angepasst sind, um elektrische Drähte (23) zu empfangen, die von den drei Paaren von Öffnungen (14) geführt werden;
- eine Barriere (21) um und zwischen jeder der drei Öffnungen (20), wobei sich die Barriere (21) in eine Richtung von einer Oberfläche (S2) des Grats (19) senkrecht weg erstreckt, und
- einen Verriegelungsmechanismus (22) in jeder der Öffnungen (20), wobei der Verriegelungsmechanismus (22) zum Verriegeln und Entriegeln der elektrischen Drähte (23) angepasst ist.

2. Elektrische oder elektronische Vorrichtung (1) nach Anspruch 1, wobei die Barriere (21) mit dem Grat (19) einstückig ausgebildet ist.

3. Elektrische oder elektronische Vorrichtung (1) nach Anspruch 1, wobei die Barriere (21) eine separate Komponente ist, die angepasst ist, um mit dem Grat (19) gekoppelt zu werden.

4. Elektrische oder elektronische Vorrichtung (1) nach einem der vorhergehenden Ansprüche, wobei der Verriegelungsmechanismus (22) eine Schnappverbindung umfasst.

5. Elektrische oder elektronische Vorrichtung (1) nach einem der vorhergehenden Ansprüche, wobei jede der Öffnungen (20) entlang einer Längsachse (L_{HF}) der Gehäusevorderseite (2a) gelegen ist.

6. Elektrische oder elektronische Vorrichtung (1) nach einem der vorhergehenden Ansprüche, wobei die Barriere (21) eine Länge 'L' aufweist und der Grat (19) eine Breite 'W' aufweist, wobei die Länge 'L' der Barriere (21) gleich der Breite W' des Grats (19) ist.

7. Elektrische oder elektronische Vorrichtung (1) nach einem der vorhergehenden Ansprüche, wobei die Gehäusevorderseite (2a) und die Gehäuserückseite (2b) abgeschrägte Merkmale (8, 9) aufweisen, die, wenn die Gehäusevorderseite (2a) und die Gehäuserückseite (2b) miteinander verbunden sind, ein V-förmiges Merkmal (10) ausbilden, derart, dass die drei Paare von Öffnungen (14) innerhalb des V-förmigen Merkmals (10) gelegen sind.

## Revendications

1. Dispositif électrique ou électronique (1) destiné à être intégré dans une paroi ou un plafond, le dispositif électrique ou électronique (1) comprenant :
- un boîtier (2) comprenant une face avant de boîtier (2a) et une partie arrière de boîtier (2b), la face avant de boîtier (2a) comprenant au moins deux évidements (16), chaque évidement (16) étant adapté pour loger une fonction de dispositif électrique ou électronique (13), et
- un cadre (11) adapté pour être prévu sur la face avant du boîtier (2a) et pour fixer le dispositif électrique ou électronique (1) à la paroi ou au plafond, le cadre (11) ayant une ouverture centrale (17) adaptée pour recevoir les fonctions de dispositif électrique ou électronique (13),
**caractérisé en ce que** la face avant du boîtier (2a) comprend en outre :
- entre deux évidements voisins (16) et au niveau d'une surface externe (S1) d'une paroi latérale (4) de la face avant du boîtier (2a), trois paires d'ouvertures (14) destinées à recevoir des fils électriques (23) pour connecter le dispositif électrique ou électronique (1) à un réseau électrique ;
- une arête (19) entre tous les deux évidements voisins (16), l'arête (19) s'étendant vers le cadre (11), ou lorsqu'elle est intégrée dans la paroi ou le plafond, dans une direction éloignée de la paroi ou du plafond, l'arête (19) comprenant des ouvertures (20) adaptées pour recevoir des fils électriques (23) guidés à partir des trois paires d'ouvertures (14) ;
- une barrière (21) autour et entre chacune des trois ouvertures (20), la barrière (21) s'étendant dans une direction perpendiculaire éloignée d'une surface (S2) de l'arête (19), et
- un mécanisme de verrouillage (22) dans chacune des ouvertures (20), le mécanisme de verrouillage (22) étant adapté pour verrouiller et déverrouiller les fils électriques (23).

2. Dispositif électrique ou électronique (1) selon la revendication 1, dans lequel la barrière (21) est formée d'un seul tenant avec l'arête (19).

3. Dispositif électrique ou électronique (1) selon la revendication 1, dans lequel la barrière (21) est un composant séparé adapté pour s'accoupler avec l'arête (19).

4. Dispositif électrique ou électronique (1) selon l'une quelconque des revendications précédentes, dans lequel le mécanisme de verrouillage (22) comprend une liaison à encliquetage.

5. Dispositif électrique ou électronique (1) selon l'une quelconque des revendications précédentes, dans lequel chacune des ouvertures (20) est située le long d'un axe longitudinal (L_{HF}) de la face avant du boîtier (2a).

6. Dispositif électrique ou électronique (1) selon l'une quelconque des revendications précédentes, la barrière (21) ayant une longueur « L » et l'arête (19) ayant une largeur « W », la longueur « L » de la barrière (21) est égale à la largeur « W » de l'arête (19).

7. Dispositif électrique ou électronique (1) selon l'une quelconque des revendications précédentes, dans lequel la face avant du boîtier (2a) et la partie arrière du boîtier (2b) présentent des éléments chanfreinés (8, 9) qui, lorsque la face avant du boîtier (2a) et la partie arrière du boîtier (2b) sont reliés l'un à l'autre, forment un élément en forme de V (10) de telle sorte que les trois paires d'ouvertures (14) sont situées à l'intérieur de l'élément en forme de V (10).
